# EUROPÄISCHE PATENTSCHRIFT

(11) **EP 1 435 200 B1**
(45) Veröffentlichungstag und Bekanntmachung des Hinweises auf die Patenterteilung: **26.07.2006**
(21) Anmeldenummer: 03028903.7
(22) Anmeldetag: 17.12.2003
(51) Int. Cl.: A01M 7/00

(54) **Landwirtschaftliche Feldspritze**
Agricultural sprayer
Pulvérisateur agricole

(30) Priorität: 21.12.2002 DE 10260479
(43) Veröffentlichungstag der Anmeldung: 07.07.2004
(73) Patentinhaber: Amazonen-Werke H. Dreyer GmbH & Co. KG, 49205 Hasbergen (DE)
(72) Erfinder: Oberheide, Friedrich, 49143 Bissendorf (DE); Austermann, Stefan, 48346 Ostbevern (DE); Marquering, Johannes, Dr., 49176 Borgloh (DE)

(56) Entgegenhaltungen:
- EP-A- 1 023 831
- DE-A- 3 401 734
- DE-A- 19 754 373
- US-A- 4 315 317
- US-A- 5 475 614
- US-A- 5 934 561

## Beschreibung

Die Erfindung betrifft eine landwirtschaftliche Feldspritze.

Eine Feldspritze mit einer Pumpe, einer Dosierarmatur, einer von der Dosierarmatur abzweigenden Rücklaufleitung, einer Rührleitung und einer sich in mehrere Spritzleitungen verzweigenden Druckleitung, wobei den Spritzleitungen Absperrventile zugeordnet sind, ist in der deutschen Offenlegungsschrift 197 54 373 A1 beschrieben. Vor der Verzweigung der Druckleitung in die einzelnen Teilbreitenleitungen der Feldspritze ist in der Druckleitung ein Durchflussmesser angeordnet. Dieser Durchflussmesser liefert über eine Datenleitung Signale an eine elektronische Steuerungs- und Regeleinrichtung, die als Bordcomputer ausgebildet sein kann. Mittels dieses Durchflussmessers lässt sich in Verbindung mit der Auswertung über den Bordcomputer die tatsächliche Ausbringmenge pro Flächeneinheit ermitteln.

Die üblicher Weise in der Landtechnik bei Feldspritzen eingesetzten Durchflussmesser arbeiten in einem Bereich von 10 l/min bis 100 l/min oder eine andere Bauart in einem Bereich zwischen 10 l/min und 200 l/min. Diese Durchflussmesser sind für den Einsatzbereich der Feldspritzen ausreichend genau.

Wenn jedoch nur geringe Mengen Flüssigkeit pro Flächeneinheit und zusätzlich nur mit einer geringen Anzahl von Teilbreiten, d.h. mit einem Bruchteil der normalen Arbeitsbreite die Flüssigkeit ausgebracht wird, kann die Ausbringmenge in der Druckleitung unter 10 l/min sinken.

Bei einem derartigen Einsatzfall liegt die zu messende Durchflussmenge unter dem unteren Messwert/Grenzwert des Messbereiches des Durchflussmessers. Es werden dann nur noch unzureichend genaue Werte von dem Durchflussmesser ermittelt, so dass keine ausreichend genaue Ermittlung der tatsächlichen Ausbringmenge im unteren Ausbringbereich und eine darauf fußende Aufzeichnung oder Regelung möglich ist.

Der Erfindung liegt die Aufgabe zugrunde, trotz des Einsatzes von preiswerten Durchflussmessern mit einfachen Mitteln auch bei der Ausbringung von geringen Flüssigkeitsmengen eine ausreichend genaue Ermittlung der tatsächlichen Ausbringmenge zu erreichen und zu gewährleisten.

Diese Aufgabe wird erfindungsgemäß durch die Merkmale des Patentanspruches 1 gelöst. Infolge dieser Maßnahmen arbeiten die Durchflussmesser in einem Messbereich, in welchem sie genaue Messwerte liefern. Somit wird die durch den Durchflussmesser fließende Flüssigkeitsmenge erhöht und durch die Differenzbildung wird die tatsächliche Ausbringmenge ermittelt.

Um in automatischer Weise den ersten Durchflussmesser immer innerhalb des vom Hersteller festgelegten Messbereiches arbeiten zu lassen, ist vorgesehen, dass in der elektronischen Steuer- und/oder Regeleinrichtung ein Grenzwert abgespeichert ist, dass das in der Zweigleitung angeordnete Absperrventil geschlossen ist, wenn die von dem ersten Durchflussmesser ermittelten Durchflussmenge oberhalb des Grenzwertes liegt und dass bei Unterschreiten des Grenzwertes durch die Durchflussmenge das Absperrventil geöffnet wird und dass die Dosierarmatur von der elektronischen Steuer- und/oder Regeleinrichtung derart angesteuert wird, dass die gewünschte Ausbringmenge ausgebracht wird.

Um die elektronische Steuer- und Regeleinrichtung an den eingesetzten Durchflussmesser anpassen zu können, ist vorgesehen, dass in der elektrischen Steuer- und/oder Regeleinrichtung in einem Speichermedium ein Programm abgelegt ist, mittels welchem entsprechend der hinterlegten unteren und oberen Grenzwerte der tatsächlichen Durchflussmenge die Ansteuerung des Absperrventils erfolgt.

In einer anderen Ausführung der Erfindung ist vorgesehen, damit der Durchflussmesser jeweils automatisch im vom Hersteller festgelegten Messbereich arbeitet, dass in der elektronischen Steuer- und/oder Regeleinrichtung in einem Speichermedium die Anzahl der Teilbreitenleitungen und zugeordneter Teilbreitenventile in einem Programm abgelegt ist, dass das Absperrventil, wenn weniger als die Hälfte der Teilbreitenleitungen zugeschaltet sind, geöffnet wird, und dass das Absperrventil, wenn mehr als die Hälfte der Teilbreitenleitungen über die Teilbreitenventile zugeschaltet sind, das Absperrventil geschlossen wird.

Um die elektronische Regel- und Steuereinrichtung an die jeweiligen Gegebenheiten der Feldspritze anpassen zu können, ist vorgesehen, dass in die elektronische Steuer- und/oder Regeleinrichtung über eine Eingabevorrichtung eingebbar ist, bei welcher Anzahl zugeschalteter und/oder abgeschalteter Teilbereiten das Absperrventil geschlossen wird.

In einer weiteren Ausführung ist vorgesehen, dass die elektronische Steuer- und/oder Regeleinrichtung eine Eingabevorrichtung aufweist, dass über die Eingabevorrichtung in ein Speichermedium eine Anzahl von aktiven und/oder nicht aktiven Teilbreiten eingebbar ist, dass bei Erreichen dieser Grenzanzahl das Absperrventil geöffnet oder geschlossen wird.

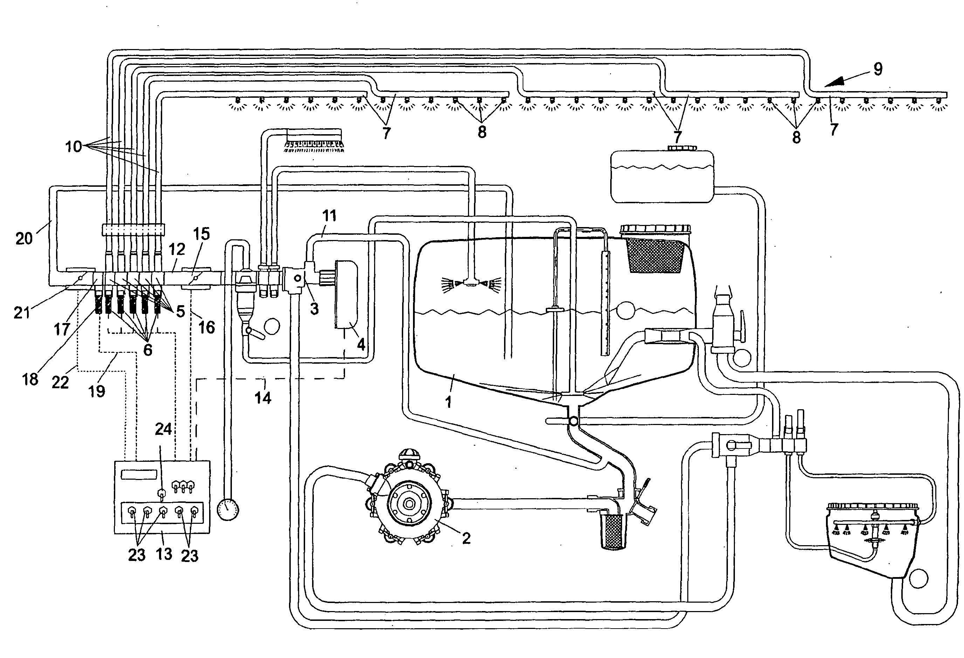

Weitere Einzelheiten der Erfindung sind den übrigen Unteransprüchen, der Beispielsbeschreibung und der Zeichnung zu entnehmen. Die Zeichnung zeigt
den Funktionsplan einer Feldspritze in Prinzipdarstellung.

Die Feldspritze weist u.a. einen Flüssigkeitstank 1, eine motorisch angetriebene Pumpe 2, eine ein Druckregelventil aufweisende Dosierarmatur 3, welche über einen Stellmotor 4 einstellbar ist, die Teilbreitenschaltventile 5 mit den motorischen Einstellgliedern 6, die zu den einzelnen Teilbreiten 7 mit Spritzdüsen 8 bestückte Verteilergestänge 9 führenden Spritzleitungen 10, die Rücklaufleitung 11 auf. Von der Dosierarmatur 3 führt die zentrale Druckleitung 12 zu den Teilbreitenschaltventilen 5 und verzeigt sich hierüber in die einzelnen Spritzleitungen 10.

Des weiteren ist die als Bordcomputer ausgebildete elektronische Steuer- und Regeleinrichtung 13 vorgesehen, welche über die Steuerleitung 14 mit dem motorischen Stellelementen 4 verbunden ist. In der Druckleitung 12 ist vor der Verzweigung in die einzelnen Spritzleitungen 10 der erste Durchflussmesser 15 angeordnet, welcher über die Leitung 16 Impulse an die elektronische Steuer- und Regeleinrichtung 13 liefert. Aufgrund der von dem ersten Durchflussmesser 15 gelieferten Impulse wird von der Steuer- und Regeleinrichtung 13 das Stellelement 4 angesteuert, so dass über die Dosierarmatur 3 die gewünschte Ausbringmenge der zentralen Druckleitung 12 bzw. den einzelnen Spritzleitungen 10 zugeführt wird.

Des weiteren ist das zusätzliche Absperrventil 17 mit der Druckleitung 12 verbunden. Das Absperrventil 17 weist das motorische Einstellelement 18 auf, welches über die Leitung 19 mit der elektronischen Steuer- und Regeleinrichtung 18 verbunden ist. An das Absperrventil 17 schließt sich die Zweigleitung 20 an, die in den Flüssigkeitstank 1 zurückführt. In der Zweigleitung 20 ist der weitere Durchflussmesser 21 angeordnet, der über die Leitung 22 mit der elektronischen Steuer- und Regeleinrichtung 13 verbunden ist.

Die elektronische Steuer- und Regeleinrichtung 13 weist die einzelnen Schalter 23 zum Betätigen der den Teilbreitenventilen 5 zugeordneten Betätigungselementen 6 auf, mittels welcher die jeweilige Teilbreite 7 freigegeben oder abgesperrt werden kann. Des weiteren ist der Zentralschalter 24 an der Steuer- und Regeleinrichtung 13 vorgesehen, mittels welcher sämtliche Teilbreitenabsperrventile 5 über die Betätigungselemente 6 gleichzeitig betätigt werden können. Dieser Zentralschalter 24 kann in die Position "spritzen" und die Position "nicht spritzen" gebracht werden, so dass über die Betätigungselemente 6 die Teilbreitenabsperrventile 5 entweder den Durchfluss freigeben oder die einzelnen Leitungen 10 absperren.

Die Funktionsweise ist folgende:

Während des normalen Spritzbetriebes, wenn eine Ausbringmenge innerhalb des normalen Messbereiches des Durchflussmessers 15 ausgebracht wird, ist das Absperrventil 17 geschlossen. In der Speichereinheit der elektronischen Steuer- und Regeleinrichtung 13 ist ein unterer Grenzwert für den Messbereich des Durchflussmessers 15 abgespeichert. Wenn die von dem ersten Durchflussmesser 15 gemessene Durchflussmenge oberhalb dieses Grenzwertes liegt, ist das Absperrventil 17 geschlossen. Wenn dieser Grenzwert unterschritten wird, wird das Absperrventil 17 geöffnet. Hierzu wird über die Steuer- und Regeleinrichtung 13 über die Leitung 19 das Einstellmittel 18 der Absperrventils 17 angesteuert, so dass das Absperrventil 17 geöffnet wird und so Flüssigkeit über die Zweigleitung 20 in den Flüssigkeitstank 1 zurückfließt. Gleichzeitig wird über die Steuer- und Regeleinrichtung 13 das Stellelement 4 der Dosierarmatur 3 angesteuert, so dass mehr Flüssigkeit über die Leitung 12 den Teilbreitenventilen 5 und dem Absperrventil 17 zugeführt wird. Es erfolgt eine Differenzbildung aus dem von den beiden Durchflussmessern 15 und 21 gelieferten Daten, so dass die tatsächliche Ausbringmenge, die über die Spritzleitungen 10 ausgebracht wird, ermittelt wird. Entsprechend dieser Daten wird dann die Dosierarmatur 3 angesteuert, damit die gewünschte Ausbringmenge ausgebracht wird.

In der elektronischen Steuer- und Regeleinrichtung ist in einem Speichermedium somit ein Programm abgelegt, mittels welchem entsprechend der hinterlegten unteren und oberen Grenzwerte der tatsächlichen Durchflussmenge die Ansteuerung des Ansperrventils 17 erfolgt.

Wenn die Ausbringmenge wieder ansteigt und oberhalb des unteren Grenzwertes des Messbereiches des Durchflussmessers 15 liegt wird mittels des Absperrventils 17 durch Ansteuerung von der elektronischen Regeleinrichtung 13 über die Leitung 19 durch das Stellelement 18 geschlossen, so dass die Leitung 20 abgesperrt ist.

Es ist auch möglich, dass das Absperrventil 17 nicht in Abhängigkeit von dem unteren Messbereich des Durchflussmessers 15 von der elektronischen Steuer- und Regeleinrichtung angesteuert wird, sondern das Absperrventil 17 in Abhängigkeit von der Anzahl der zugeschalteten Teilbreitenventile 5 geschaltet wird.

Hierzu ist dann in der elektronischen Steuer- und Regeleinrichtung 13 in einem Speichermedium die Anzahl der Teilbreitenleitungen 10 und zugeordneter Teilbreitenventile 5 in einem Programm abgelegt, so dass das Absperrventil 17, wenn weniger als die Hälfte der Teilleitungen 10 zugeschaltet sind, geöffnet wird, und dass das Absperrventil 17, wenn mehr als die Hälfte der Teilbreitenleitungen 10 über die Teilbreitenventile 5 zugeschaltet sind, das Absperrventil 17 geschlossen wird. Hierbei wird dann entsprechend der von den Durchflussmessern 15 und 21 gelieferten Daten durch Differenzbildung die tatsächliche Ausbringmenge ermittelt.

Wie bereits vor erläutert, sind die Absperrventile 17 mit der elektronischen Steuer- und Regeleinrichtung 13 verbunden und werden von dieser Einrichtung 13 entsprechend angesteuert, so dass die Absperrventile 5 über die Stellenelemente 6 geschaltet werden.

Die Steuer- und Regeleinrichtung 13 weist eine nicht dargestellte Eingabevorrichtung auf, mittels welcher die tatsächliche Anzahl der Teilbreitenventile 5 eingebbar ist, bei welcher Anzahl zugeschalteter und/oder abgeschalteter Teilbreiten 7 das Absperrventil 17 geschlossen wird.

Alternativ kann weiterhin die elektronische Steuer- und Regeleinrichtung 13 über eine nicht dargestellte Eingabevorrichtung, die Anzahl von aktiven oder nicht aktiven Teilbreiten 7 über die Eingabevorrichtung in ein Speichermedium eingegeben werden, so dass bei Erreichen dieser Grenzanzahl das Absperrventil 17 geöffnet oder geschlossen wird.

Hierbei ist dann je nach Einsatzfall es möglich, dass das Absperrventil 17 geöffnet wird, wenn gleich oder weniger als die eingegebene Anzahl von Teilbreiten 7 zugeschaltet sind und das Absperrventil 17 geschlossen ist, wenn mehr als die eingegebene Mindestanzahl von Teilbreiten 7 zugeschaltet sind oder dass das Absperrventil 17 geöffnet ist, wenn gleich oder mehr als die eingegebene Anzahl von Teilbreiten 7 abgeschaltet sind, und dass das Absperrventil 17 geschlossen ist, wenn mehr als die eingegebene Teilbreiten 7 zugeschaltet sind.

## Patentansprüche

1. Landwirtschaftliche Feldspritze mit einem Flüssigkeitstank (1), einer Pumpe (2), einer Dosierarmatur (3), einer von der Dosierarmatur (3) abzweigenden Rücklaufleitung (11), einer Rührleitung und einer sich in mehrere Spritzleitungen (10) und eine zum Flüssigkeitstank(1) zurückführende Zweigleitung (20) verzweigenden Druckleitung (12), wobei den Spritzleitungen (10) und der Zweigleitung (20) Absperrventile (5,17) zugeordnet sind, wobei zwischen der Dosierarmatur (3) und der Verzweigung der Druckleitung (12) in die Spritzleitungen (10) und die Zweigleitung (20) in der Druckleitung (12) ein erster Durchflussmesser (15), der mit einer elektronischen Steuerungs- und/oder Regeleinrichtung (13) verbunden ist, angeordnet ist, wobei, in der Zweigleitung (20) zwischen Absperrventil (17) und Flüssigkeitstank (1) zumindest ein weiterer Durchflussmesser (21), der ebenfalls mit der elektronischen Steuer- und/oder Regeleinrichtung (13) verbunden ist, angeordnet ist, wobei durch Differenzbildung der aus den von den Durchflussmessern (15,21)gelieferten Daten ermittelten Durchflussmengen von der elektronischen Steuer- und/oder Regeleinrichtung (13) die tatsächliche Ausbringmenge ermittelbar ist.

2. Feldspritze nach Anspruch 1, **dadurch gekennzeichnet, dass** in der Steuer- und/oder Regeleinrichtung (13) ein Grenzwert abgespeichert ist, dass das in der Zweigleitung (20) angeordnete Absperrventil (17) geschlossen ist, wenn die von dem ersten Durchflussmesser (15) ermittelte Durchflussmenge oberhalb des Grenzwertes liegt und dass bei Unterschreiten des Grenzwertes durch die Durchflussmenge das Absperrventil (17) geöffnet wird und dass die Dosierarmatur (3) von der elektronischen Steuer- und/oder Regeleinrichtung (13) derart angesteuert wird, dass die gewünschte Ausbringmenge ausgebracht wird.

3. Feldspritze nach einem oder mehreren der vorstehenden Ansprüche, **dadurch gekennzeichnet, dass** in der elektrischen Steuer- und/oder Regeleinrichtung (13) in einem Speichermedium ein Programm abgelegt ist, mittels welchem entsprechend der hinterlegten unteren und oberen Grenzwerte der tatsächlichen Durchflussmenge die Ansteuerung des Absperrventils (17) erfolgt.

4. Feldspritze nach Anspruch 1, **dadurch gekennzeichnet, dass** in der elektronischen Steuer- und/oder Regeleinrichtung (13) in einem Speichermedium die Anzahl der Teilbreitenleitungen (10) und zugeordneter Teilbreitenventile (5) in einem Programm abgelegt ist, dass das Absperrventil (17), wenn weniger als die Hälfte der Teilbreitenleitungen (10) zugeschaltet sind, geöffnet wird, und dass das Absperrventil (17), wenn mehr als die Hälfte der Teilbreitenleitungen (10) über die Teilbreitenventile (5) zugeschaltet sind, das Absperrventil (17) geschlossen wird.

5. Feldspritze nach einem oder mehreren der Ansprüche, **dadurch gekennzeichnet, dass** die Teilbreitenventile (17) mit der elektronischen Steuer- und/oder Regeleinrichtung (13) verbunden sind und von dieser Einrichtung (13) angesteuert werden, so dass das Absperrventil (17) entsprechend geschaltet werden.

6. Feldspritze nach Anspruch 1, **dadurch gekennzeichnet, dass** in die elektronische Steuer- und/oder Regeleinrichtung (13) über eine Eingabevorrichtung eingebbar ist, bei welcher Anzahl zugeschalteter und/oder abgeschalteter Teilbereiten (7,10) das Absperrventil (17) geschlossen wird.

7. Feldspritze nach Anspruch 1 und/oder 6, **dadurch gekennzeichnet, dass** die elektronische Steuer- und/oder Regeleinrichtung (13) eine Eingabevorrichtung aufweist, dass über die Eingabevorrichtung in ein Speichermedium eine Anzahl von aktiven und/oder nicht aktiven Teilbreiten (10) eingebbar ist, dass bei Erreichen dieser Grenzanzahl das Absperrventil (17) geöffnet oder geschlossen wird.

8. Feldspritze nach Anspruch 6, **dadurch gekennzeichnet, dass** das Absperrventil (17) geöffnet wird, wenn gleich oder weniger als die eingegebene Anzahl von Teilbreiten (7,10) zugeschaltet sind, und dass Absperrventil (17) geschlossen ist, wenn mehr als die eingegebenen Mindestanzahl von Teilbreiten (7,10)zugeschaltet sind.

9. Feldspritze nach Anspruch 6, **dadurch gekennzeichnet, dass** das Absperrventil geöffnet ist, wenn gleich oder mehr als die eingegebene Anzahl von Teilbreiten (7,10) abgeschaltet sind, und das Absperrventil (17) geschlossen ist, wenn mehr als die eingegebene Teilbreiten (7,10) zugeschaltet sind.

## Claims

1. Agricultural spraying machine having a liquid product tank (1), a pump (2), a metering device (3), a return line (11) that branches off from the metering device (3), an agitating line and a pressure line (12) that branches into a plurality of spraying lines (10) and one branch line (20) that leads back to the liquid product tank (1), wherein shut-off valves (5, 17) are associated with the spraying lines (10) and the branch line (20), wherein between the metering device (3) and the branching of the pressure line (12) into the spraying lines (10) and the branch the (20) in the pressure line (12) there is disposed a first flow meter (15), which is connected to an electronic control and/or regulating device (13), wherein in the branch line (20) between shut-off valve (17) and liquid product tank (1) there is disposed at least one additional flow meter (21), which is also connected to the electronic control and/or regulating device, wherein the actual discharge quantity is determinable by the electronic control and/or regulating device (13) by calculating the difference between the flow rates determined from the data supplied by the flow meters (15, 21).

2. Spraying machine according to claim 1, **characterised in that** a limit value is stored in the control and/or regulating device (13), **in that** the shut-off valve (17) that is disposed in the branch line (20) is closed when the flow rate determined by the first flow meter (15) is in excess of the limit value and **in that** when the flow rate falls below the limit value the shut-off valve (17) is opened and **in that** the metering device (3) is operated by the control and/or regulating device (13) in such a manner that the desired discharge quantity is discharged.

3. Spraying machine according to one or more of the preceding claims, **characterised in that** a program is stored in a storage medium in the electronic control and/or regulating device (13), the operation of the shut-off valve (17) being effected through the intermediary of the said program in accordance with the stored lower and upper limit values of the actual flow rate.

4. Spraying machine according to claim 1, **characterised in that** the number of partial width lines (10) and associated partial width valves (5) is stored in a program in a storage medium in the electronic control and/or regulating device (13), **in that** the shut-off valve (17) is opened when less than half of the partial width lines (10) are connected, and **in that** the shut-off valve (17) is closed when more than half of the partial width lines (10) are connected via the partial width valves (5).

5. Spraying machine according to one or more claims, **characterised in that** the partial width valves (17) are connected to the electronic control and/or regulating device (13) and are operated by this device (13) such that the shut-off valve (17) is connected in a corresponding manner.

6. Spraying machine according to claim 1, **characterised in that** the number of connected and/or disconnected partial widths (7, 10) at which the shut-off valve (17) is closed can be input into the electronic control and/or regulating device (13) via an input device.

7. Spraying machine according to claim 1 and/or 6, **characterised in that** the electronic control and/or regulating device (13) includes an input device, **in that** a number of active and/or non-active partial widths (10) can be input via the input device into a storage medium, **in that** the shut-off valve (17) is opened or closed when this limit number is obtained.

8. Spraying machine according to claim 6, **characterised in that** the shut-off valve (17) is opened when the identical number or fewer than the number of partial widths (7, 10) input are connected, and **in that** shut-off valve (17) is closed when more than the minimum number of partial widths (7, 10) input are connected.

9. Spraying machine according to claim 6, **characterised in that** the shut-off valve is opened when the identical number or more than the number of partial widths (7, 10) input are disconnected, and the shut-off valve (17) is closed when more than the partial widths (7, 10) input are connected.

## Revendications

1. Pulvérisateur agricole comportant un réservoir de liquide (1), une pompe (2), un robinet de dosage (3), une conduite de retour (11) partant du robinet de dosage (3), un conduite d'agitation et une conduite de pression (12) se divisant en plusieurs conduites d'éjection (10) et une conduite de dérivation (20) retournant au réservoir de liquide (1), les conduites d'éjection (10) et la conduite de dérivation (20) comportant des vannes d'arrêt (5, 17),
un premier débitmètre (15) installé entre le robinet de dosage (3) et la dérivation de la conduite de pression (12) vers les conduites d'éjection (10) et la conduite de dérivation (20), ce débitmètre étant relié à une installation de commande et/ou de régulation électronique (13), et au moins un autre débitmètre (21) installé dans la conduite de dérivation (20) entre la vanne d'arrêt (17) et le réservoir de liquide (1), ce débitmètre étant également relié à l'installation de commande et/ou de régulation électronique (13), dans lequel
en formant la différence des débits correspondants aux données fournies par les débitmètres (15, 21), l'installation de commande et/ou de régulation électronique (13) détermine la quantité effectivement distribuée.

2. Pulvérisateur agricole selon la revendication 1,
**caractérisé en ce qu'**
une valeur limitée mise en mémoire dans l'installation de commande et/ou de régulation (13),
la vanne d'arrêt (17) de la conduite de dérivation (20) est fermée si le débit fourni par le premier débitmètre (15) est supérieur à la valeur limite, et on ouvre la vanne d'arrêt (17) si le débit dépasse vers le bas la valeur limite, et
le robinet de dosage (3) est commandé par l'installation de commande et/ou de régulation électronique (13) pour distribuer la quantité souhaitée.

3. Pulvérisateur agricole selon une ou plusieurs des revendications précédentes,
**caractérisé en ce que**
l'installation de commande et/ou de régulation électronique (3) contient un programme qui en fonction des valeurs limites inférieure supérieure enregistrées, pour le débit effectif, assure la commande de la vanne d'arrêt (17).

4. Pulvérisateur agricole selon la revendication 1,
**caractérisé en ce que**
l'installation de commande et/ou de régulation électronique (13) contient dans un support de mémoire, le nombre de conduites de fraction de largeur (10) et des vannes de fraction de largeur (5) correspondant dans un programme,
et si moins de la moitié des conduites de fraction de largeur (10) sont branchées, on ouvre la vanne d'arrêt (17) et
si plus de la moitié des conduites de fraction de largeur (10) sont branchées par les vannes de fraction de largeur (5), on ferme la vanne d'arrêt (17).

5. Pulvérisateur agricole selon une ou plusieurs des revendications présentes,
**caractérisé en ce que**
les vannes de fraction de largeur (17) sont reliées à l'installation de commande et/ou de régulation électronique (13), qui les commande de façon à commuter de manière correspondante la vanne d'arrêt (17).

6. Pulvérisateur agricole selon la revendication 1,
**caractérisé en ce que**
l'installation de commande et/ou de régulation électronique (13) reçoit des entrées par un dispositif d'entrée indiquant le nombre de fractions de largeur (7, 10) branchée et/ou coupée pour la vanne d'arrêt (17).

7. Pulvérisateur agricole selon la revendication 1 et/ ou 6,
**caractérisé en ce que**
l'installation de commande et/ou de régulation électronique (13) comporte un dispositif d'entrée, permettant d'introduire dans une mémoire, un nombre de fractions de largeur actives ou non actives (10) et lorsqu'on atteint cette valeur limite on ouvre ou on ferme la vanne d'arrêt (17).

8. Pulvérisateur agricole selon la revendication 6,
**caractérisé en ce qu'**
on ouvre la vanne d'arrêt (17) si un nombre égal ou inférieur au nombre introduit de fractions de largeur (7, 10) est branché et
on ferme la vanne d'arrêt (17) si plus du nombre minimum de fractions de largeur (7, 10) entré sont branchées.

9. Pulvérisateur agricole selon la revendication 6,
**caractérisé en ce qu'**
on ouvre la vanne d'arrêt si le nombre de fractions de largeur (7, 10) coupées est égal ou supérieur au nombre entré, et on ferme la vanne d'arrêt (17) si le nombre de fractions de largeur (6, 10) branchées est supérieur au nombre entré.
